# EUROPEAN PATENT APPLICATION

(11) **EP 2 190 171 A1**
(43) Date of publication of application: **26.05.2010**
(21) Application number: 09176177.5
(22) Date of filing: 17.11.2009
(51) Int. Cl.: H04M 1/02, H04M 1/725

(54) **Cellular telephone apparatus and control method of the apparatus**

(30) Priority: 21.11.2008 JP 2008298020
(71) Applicant: NTT DoCoMo, Inc., Tokyo 100-6150 (JP)
(72) Inventor: Naruse, Naoki, Tokyo 100-6150 (JP)
(74) Representative: Schwabe - Sandmair - Marx

(57) **Abstract**

To separate a part of a cellular telephone apparatus to use, while ensuring the convenience in various functions installed in the cellular telephone apparatus, in a cellular telephone apparatus 1 where a sub-terminal 3 constituting a part of the cellular telephone apparatus 1 is provided to be separable from a main terminal 2 constituting the apparatus body, provided are a state monitoring section 24 that detects a state of the sub-terminal 3, a table holding section 25 that holds a device table that defines devices driven in various functions of the cellular telephone apparatus 1 corresponding to states of the sub-terminal 3, and a control section 21 that determines devices driven in the sub-terminal 3 and main terminal 2 according to descriptions of the device table in response to the state of the sub-terminal 3 detected in the state monitoring section 24.

## Description

### BACKGROUND OF THE INVENTION

### Field of the Invention

The present invention relates to a cellular telephone apparatus and control method, and more particularly, to a cellular telephone apparatus provided with a part separable from the cellular telephone apparatus and control method of the apparatus.

### Related Background Art

Conventionally, to enhance convenience in using the videophone function, a cellular telephone apparatus is proposed that an imaging/display unit constituting a part of the cellular telephone apparatus is provided to be separable from the main body of the cellular telephone apparatus (for example, JP 2004-120056). In this cellular telephone apparatus, in using the videophone function, by separating the imaging/display unit from the main body of the cellular telephone apparatus and positioning the unit to face the user's face, the user is capable of calling in the normal calling posture of putting the apparatus body to the user's ear, while transmitting an image of the user taken by the image pickup camera to the communicating party, and watching the display section displaying an image transmitted from the communicating party.

However, in the aforementioned conventional cellular telephone apparatus, although it is possible to enhance convenience in using the videophone function, there are cases that the convenience decreases in using the other functions installed in the cellular telephone apparatus. In other words, currently, cellular telephone apparatuses have been installed with many functions, and the apparatus is easy to use in some operating function when a part of the cellular telephone apparatus is not separated, while being hard to use when the part is separated. In contrast thereto, in another operating function, the apparatus is easy to use when a part of the cellular telephone apparatus is separated, while being hard to use when the part is not separated.

For example, in performing a voice call when the cellular telephone is not separated, the receiver constituting the call receiving section is driven on the apparatus (hereinafter, referred to as a "separate apparatus") to be separated from the apparatus body, and the microphone constituting the call transmitting section is driven on the apparatus body side. When the user separates the separate apparatus from the apparatus body in this state (for example, when the user wants to check an e-mail or scheduler in the display section on the separate apparatus side while performing a voice call), since the receiver is driven on the separate apparatus side, it becomes hard to hear the voice of the communicating party. Further, in performing a videophone call with the apparatus separated as described above, the receiver and microphone are driven on the apparatus body side, and when the user connects the separate apparatus to the apparatus body in this state (for example, when the user desires a videophone call with the cellular telephone apparatus placed on a desk or the like), it becomes hard to hear the voice of the communicating party driven by the receiver on the apparatus body side. It is preferable that the receiver on the apparatus body side is driven in the former case, and that the receiver driven on the apparatus body side is switched to, for example, the speaker of the separate apparatus to output the voice of the communicating party in the latter case.

### SUMMARY OF THE INVENTION

It is an object of the present invention to provide a cellular telephone apparatus enabling a part of the cellular telephone apparatus to separate to be used, while ensuring the convenience in various functions installed in the cellular telephone apparatus, and a control method of the apparatus.

A cellular telephone apparatus of the invention is a cellular telephone apparatus in which a first apparatus constituting a part of the cellular telephone apparatus is provided to be separable from a second apparatus constituting an apparatus body, and has a detecting section that detects a state of the first apparatus, a table holding section that holds a device table that defines devices driven in various functions of the cellular telephone apparatus corresponding to states of the first apparatus, and a control section that determines devices driven in the first apparatus and the second apparatus according to descriptions of the device table in response to the state of the first apparatus detected in the detecting section.

According to this constitution, since the devices driven in various functions are determined in response to the state of the first apparatus constituting a part of the cellular telephone apparatus, it is possible to select and drive devices required to execute various functions, and therefore, it is possible to separate a part of the cellular telephone apparatus to use while ensuring the convenience in various functions installed in the cellular telephone apparatus.

In the cellular telephone apparatus of the invention, it is preferable that the detecting section notifies the control section of the state of the first apparatus that has been changed when the detecting section detects a change in the state of the first apparatus, and that the control section judges devices driven in the first apparatus and the second apparatus according to descriptions of the device table in response to the notified state of the first apparatus. In this case, whenever a change is detected in the state of the first apparatus constituting a part of the cellular telephone apparatus, the devices driven in the first apparatus and the second apparatus are judged in response to the state of the first apparatus that has been changed. It is thereby possible to drive suitable devices corresponding to the function operating in the cellular telephone apparatus whenever the state of the part of the cellular telephone apparatus is switched.

In the cellular telephone apparatus of the invention, when a change in the state is detected in the function operating in the cellular telephone apparatus, the control section preferably inquires of the detecting section for the state of the first apparatus, and judges devices driven in the first apparatus and the second apparatus according to descriptions of the device table in response to the responded state of the first apparatus. In this case, whenever a change in the state is detected in the function operating in the cellular telephone apparatus, devices driven in the first apparatus and the second apparatus are judged in response to the current state of the first apparatus. It is thereby possible to drive suitable devices corresponding to the switched function whenever the state of the function operating in the cellular telephone apparatus is switched.

In the cellular telephone apparatus of the invention, when the control section is instructed to use a particular function that is inoperable in the current state of the first apparatus, the control section preferably informs of the state of the first apparatus enabling the particular function to operate. In this case, even when the control section is instructed to use a particular function that cannot operate in the current state of the first apparatus, the user is informed of the state of the first apparatus enabling the particular function to operate, and it is thus possible to urge the user to change the state of the first apparatus, and the like.

In the cellular telephone apparatus of the invention, the device table preferably defines a device driven in a function expected to be used when the state of the first apparatus is switched in the particular function of the cellular telephone apparatus. In this case, when the state of the first apparatus is switched while the particular function is operating in the cellular telephone, it is possible to drive the device driven in the function expected to be used in the switched state of the first apparatus, an input operation by the user can thereby be omitted, and it is possible to provide the cellular telephone apparatus with more excellent operability.

For example, in the cellular telephone apparatus of the invention, the device table defines a device driven to use the voice calling function only by the second apparatus when the first apparatus is switched to the separate state in the voice calling function in the cellular telephone apparatus. Further, the device table defines a device driven to use the e-mail processing function only by the first apparatus when the first apparatus is switched to the separate state in the e-mail processing function in the cellular telephone apparatus. Furthermore, the device table defines a device driven to use the browser function only by the first apparatus when the first apparatus is switched to the separate state in the browser function in the cellular telephone apparatus. Still furthermore, the device table defines a device driven to use the speech replay function only by the first apparatus when the first apparatus is switched to the separate state in the speech replay function in the cellular telephone apparatus.

A control method of a cellular telephone apparatus of the invention is a control method of a cellular telephone apparatus in which a first apparatus constituting a part of the cellular telephone apparatus is provided to be separable from a second apparatus constituting an apparatus body, and the cellular telephone apparatus holds a device table that defines devices driven in various functions of the cellular telephone apparatus corresponding to states of the first apparatus, and has the steps of detecting a state of the first apparatus, and determining devices driven in the first apparatus and the second apparatus according to descriptions of the device table in response to the state of the first apparatus.

According to this method, since the devices driven in various functions are determined in response to the state of the first apparatus constituting a part of the cellular telephone apparatus, it is possible to select and drive devices required to execute various functions, and therefore, it is possible to separate a part of the cellular telephone apparatus to use while ensuring the convenience in various functions.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.
FIG. 1 is a diagram showing an appearance of a cellular telephone according to one embodiment of the invention;
FIG. 2 is a block diagram illustrating a configuration of a main terminal in the cellular telephone according to the embodiment;
FIG. 3 is a block diagram illustrating a configuration of a sub-terminal in the cellular telephone according to the embodiment;
FIG. 4 is a diagram to explain descriptions registered with a display table held in a table holding section of the main terminal in the cellular telephone according to the embodiment;
FIG. 5 is another diagram to explain descriptions registered with the device table held in the table holding section of the main terminal in the cellular telephone according to the embodiment;
FIG. 6 is a sequence diagram to explain operations in determining devices driven in the main terminal and the sub-terminal in the cellular telephone according to the embodiment;
FIG. 7 is another sequence diagram to explain operations in determining devices driven in the main terminal and the sub-terminal in the cellular telephone according to the embodiment;
FIG. 8 is a sequence diagram to explain operations when the state of the sub-terminal is switched while a particular function is operating where the function becomes inoperable corresponding to the state of the sub-terminal in the cellular telephone according to the embodiment; and
FIG. 9 is a diagram to explain variations of the connection form of the sub-terminal to the main terminal of the cellular telephone according to the embodiment.

### DESCRIPTION OF THE PREFERRED EMBODIMENTS

An embodiment of the present invention will specifically be described below with reference to accompanying drawings. In the following description, the case is described that the present invention is embodied using a cellular telephone apparatus (hereinafter, simply referred to as a "cellular telephone") 1 , but the invention is not limited thereto, and is achieved also as a control method of the cellular telephone 1.

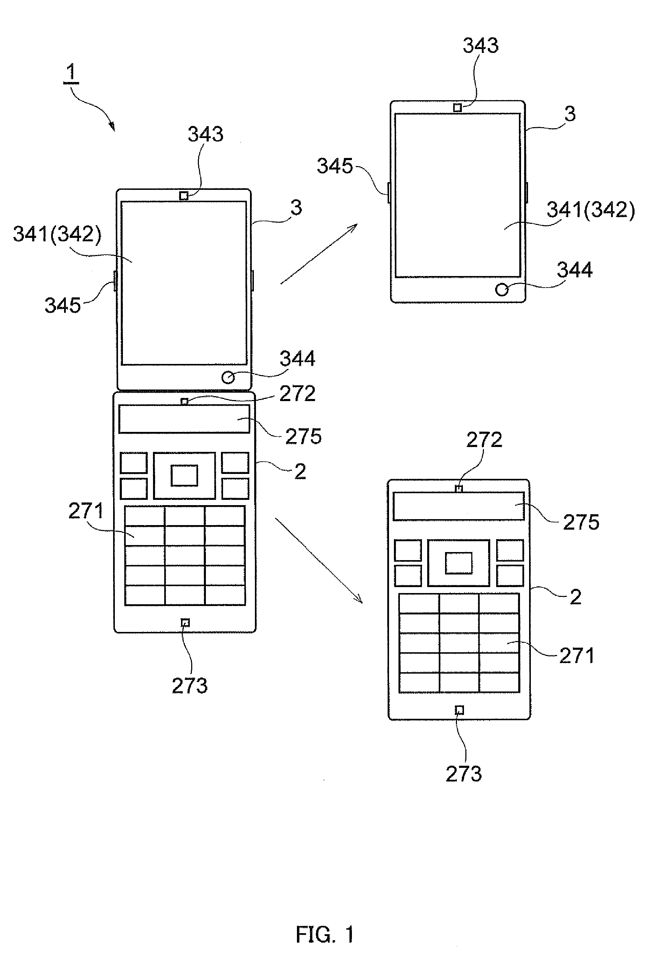

FIG. 1 is a diagram showing an appearance of the cellular telephone apparatus 1 according to one embodiment of the invention. As shown in FIG. 1, the cellular telephone 1 according to this embodiment is comprised of a main terminal 2 formed of an apparatus (second apparatus) installed with main functions of the cellular telephone 1, and a sub-terminal 3 formed of an apparatus (first apparatus) installed with part of functions of the cellular telephone 1. The sub-terminal 3 is provided to be separable from the main terminal 2, and is configured to execute part of functions (for example, e-mail check function, music player function, and One Seg function) of the cellular telephone 1 by only the sub-terminal 3 by performing near field radio communication, described later, with the main terminal 2. In addition, the main terminal 2 and sub-terminal 3 are provided to be connectable in a predetermined portion by magneto, and are capable of being used as a common one-piece cellular telephone in the connected state.

For example, such a separable type cellular telephone 1 is suitable for a usage mode where the user puts the main terminal 2 into a bag, etc, always wears the sub-terminal 3 as a media player of music and pictures, and only when needing a complicated operation, takes the main terminal 2 out of the bag to operate from the main terminal 2 side. Further, for example, when the user watches one-segment broadcasting in a bath or the like hard to receive radio signals, the cellular telephone 1 is suitable for another usage mode where the user places the main terminal 2 in a position near the window easy to receive radio signals, brings only the sub-terminal 3 to the bath, and receives one-segment broadcasting data from the main terminal 2 to watch. This embodiment is to ensure the convenience in various functions installed in the cellular telephone 1 in using the cellular telephone 1 in a state where the main terminal 2 and sub-terminal 3 are separated (hereinafter, referred to as a "separate state" as appropriate) and in another state where the main terminal 2 and sub-terminal 3 are connected (hereinafter, referred to as a "connected state" as appropriate).

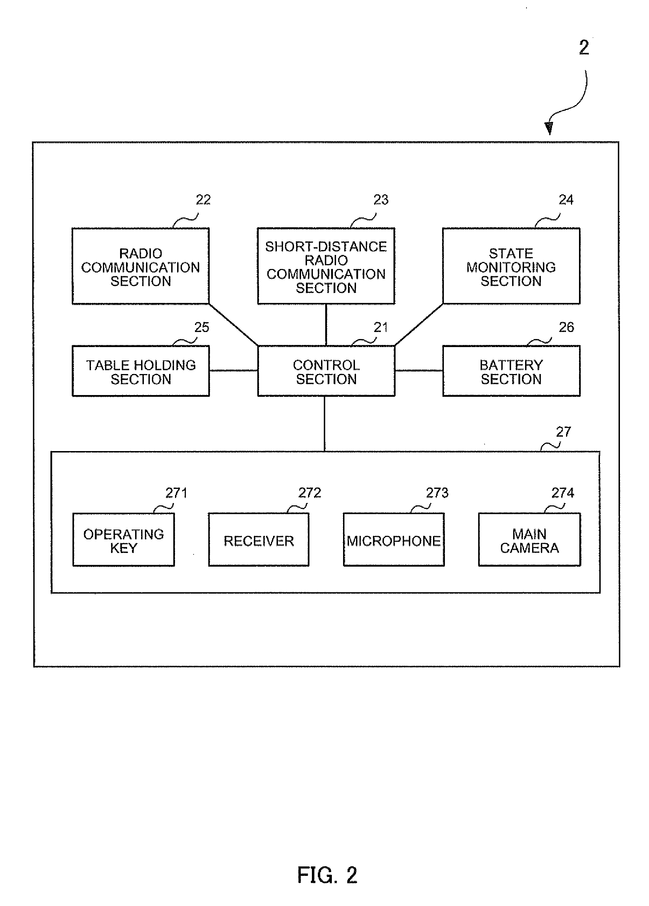

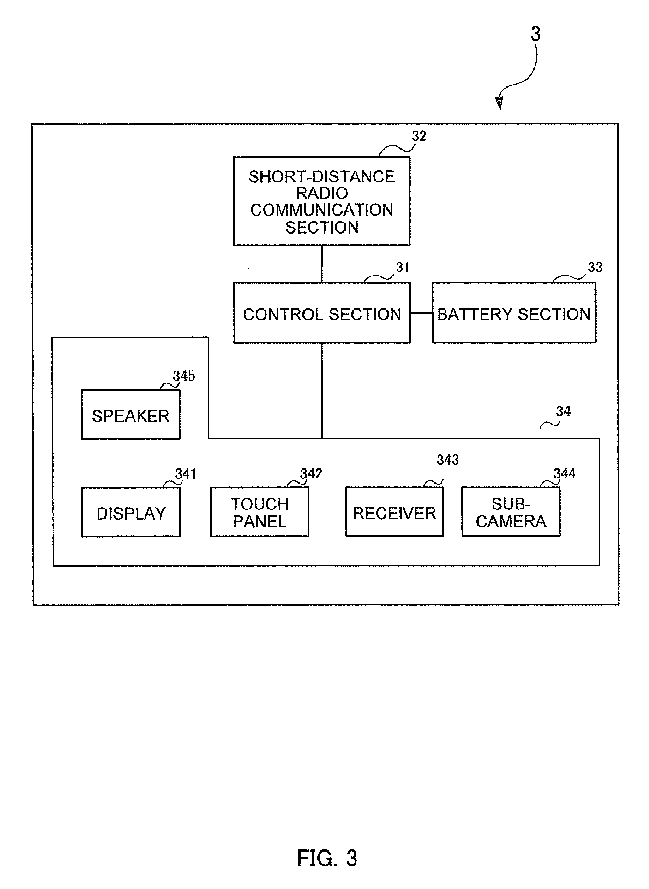

Configurations of the main terminal 2 and sub-terminal 3 that the cellular telephone 1 has will be described below using FIGs. 2 and 3 while referring to the appearance of the cellular telephone 1 as shown in FIG. 1 as appropriate. FiGs. 2 and 3 are block diagrams respectively illustrating configurations of the main terminal 2 and sub-terminal 3 that the cellular telephone 1 according to this embodiment has. In addition, the configurations of the cellular telephone 1 as shown in FIGs. 2 and 3 are simplified to describe the invention, and are assumed to have components that the common cellular telephone 1 has.

As shown in FIG. 2, the main terminal 2 that the cellular telephone 1 according to this embodiment has is comprised of a control section 21 that controls the entire main terminal 2, and a radio communication section 22, short-distance radio communication section 23, state monitoring section 24, table holding section 25, battery section 26 and device group 27 each connected to the control section 21. Then, the device group 27 installed in the main terminal 2 includes an operating key 271, receiver 272, microphone 273 and main camera 274.

The radio communication section 22 performs radio communication with a base station apparatus installed onto a mobile communication network via an antenna apparatus not shown. For example, the radio communication section 22 transmits speech data and packet data from the cellular telephone 1 to the base station apparatus via the mobile communication network in performing speech communication and packet communication with another cellular telephone or the like, while receiving speech data and packet data from the communicating party from the base station apparatus via the mobile communication network.

The short-distance radio communication section 23 performs short-distance radio communication with the sub-terminal 3 via the antenna apparatus not shown. In this embodiment, the short-distance radio communication section 23 performs Bluetooth communication, and transmits speech data and image data to the sub-terminal 3, while receiving requests for various kinds of processing and the like sent from the sub-terminal 3. In addition, this embodiment shows the case of using Bluetooth in radio communication between the main terminal 2 and sub-terminal 3, but the communication technique used in radio communication between the terminals 2 and 3 is not limited thereto, and is capable of being modified as appropriate. For example, IrDA (Infrared Data Association) using infrared rays may be applied.

The state monitoring section 24 functions as a detecting section that detects the state of the sub-terminal 3 constituting a part of the cellular telephone 1, and monitors the state (separate state and connected state) of the sub-terminal 3 with respect to the main terminal 2. The state monitoring section 24 regularly monitors the state of the sub-terminal 3, and when detecting a change in the state of the sub-terminal 3, notifies the control section 21 of the change. For example, the state monitoring section 24 is formed of a magnetic sensor, and detects the state of the sub-terminal 3 with respect to the main terminal 2 based on the magnetic intensity and direction changing corresponding to the connected state and separate state of the main terminal 2 and sub-terminal 3. In addition, this embodiment shows the case of using a magnetic sensor in detection of the connected state and separate state of the main terminal 2 and sub-terminal 3, but the configuration for detecting the states is not limited thereto, and is capable of being modified as appropriate.

The table holding section 25 holds a device table that defines devices driven in various functions installed in the cellular telephone 1 corresponding to the states (connected state and separated state) of the sub-terminal 3 with respect to the main terminal 2. With the device table is registered whether or not to drive various devices (for example, operating key 271 of the main terminal, touch panel 342 of the sub-terminal described later) that the main terminal 2 and sub-terminal 3 of the cellular telephone 1 have in association with various functions (for example, voice calling function, e-mail processing function, etc.) installed in the cellular telephone 1. In addition, details of descriptions registered with the device table will be described later.

The battery section 26 is a portion that supplies power required for the main terminal 2 to operate. The battery section 26 is provided to be detachable from a battery storage section provided in the main terminal 2, and is configured to be capable of being charged by a charger not shown. The main terminal 2 is designed to be able to operate for a predetermined time corresponding to driving conditions of various devices and radio communication conditions when the battery section 26 is charged with the main terminal 2 being independent or with the main terminal 2 connected to the sub-terminal 3.

The operating key 271 constituting a part of the device group 27 receives an operation from the user, and is comprised of a numeric keypad for receiving inputs of numerical and text, direction key for moving a cursor displayed on a main display 341 of the sub-terminal 3 described later, a determination key for selecting information specified by movement of the cursor, and function keys associated with particular functions.

The receiver 272 is a portion mainly constituting a call receiving section, and outputs a voice of a communicating party in using the voice calling function and videophone function with the sub-terminal 3 separated. Further, the receiver 272 outputs speech data in one-segment broadcasting when the one-segment broadcasting receiving function (hereinafter, referred to as "One Seg function" as appropriate) is used with the sub-terminal 3 separated.

The microphone 273 is a portion mainly constituting a call transmitting section, and receives user's voice in using the voice calling function and videophone function irrespective of the state of the sub-terminal 3 (in other words, irrespective of whether the sub-terminal 3 is in the connected state or separate state). In addition, the sensitivity of the microphone 273 in using the videophone function is higher than the sensitivity in using the voice calling function.

The main camera 274 is used as a main image pickup apparatus in using the camera function. In addition, this main camera 274 is provided on the back of the main terminal 2 and does not appear in the main terminal 2 as shown in FIG. 1. Further, in the main terminal 2 as shown in FIG. 1, a sub-display 275 is provided above the operating key 271. For example, the sub-display 275 displays information of battery remaining amounts of the main terminal 2 and sub-terminal 3, etc. but is omitted from the device group 27 as shown in FIG. 2 to simplify the descriptions of the invention.

The control section 21 controls these components. Particularly, the control section 21 determines devices driven in the main terminal 2 and sub-terminal 3 according to descriptions of the device table in response to the state (separated state or connected state) of the sub-terminal 3 with respect to the main terminal 2 by the state monitoring section 24 when various functions installed in the cellular telephone 1 operate.

Meanwhile, as shown in FIG. 3, the sub-terminal 3 that the cellular telephone 1 according to this embodiment has is comprised of a control section 31 that controls the entire sub-terminal 3, and a short-distance radio communication section 32, battery section 33 and device group 34 each connected to the control section 31. Then, the device group 34 installed in the sub-terminal 3 includes a display 341, touch panel 342, receiver 343, sub-camera 344, and speaker 345.

The short-distance radio communication section 32 performs short-distance radio communication with the main terminal 2 via an antenna apparatus not shown. For example, the short-distance radio communication section 32 performs Bluetooth communication as in the short-distance radio communication section 23 on the main terminal 2 side, and receives speech data and image data from the main terminal 2, while transmitting requests for various kinds of processing and the like to the main terminal 2.

The battery section 33 is a potion that supplies power required for the sub-terminal 3 to operate. The battery section 33 is provided to be detachable from a battery storage section provided in the sub-terminal 3, and is configured to be capable of being charged by a charger not shown. The sub-terminal 3 is designed to be able to operate for a predetermined time corresponding to driving conditions of various devices and short-distance radio communication conditions when the battery section 33 is charged with the sub-terminal 3 being independent.

The display 341 constituting a part of the device group 34 forms a main display of the cellular telephone 1, and displays screen data and picture data used in various functions operating in the cellular telephone 1. For example, when the voice calling function operates, the display 341 displays a screen (in-progress call screen) indicative of a call being in progress, and when the e-mail processing function operates, the display 341 displays a screen (e-mail screen) enabling the user to check and create an e-mail, etc. Further, when the videophone function operates, for example, the display 341 displays a face image of the communicating party, and when the One Seg function operates, the display 341 displays picture data in one-segment broadcasting. Furthermore, the display 341 displays an operation screen (for example, menu screen) corresponding to an input area of the touch panel 342 described later when the touch panel 342 receives an operation of the user.

The touch panel 342 is disposed in the lower layer portion of the display 341, and is a portion constituting an operation section when the sub-terminal 3 operates independently. In the touch panel 342 are formed input areas corresponding to the operation screen used in various functions operating in the cellular telephone 1, and it is possible to receive a user desired input operation. For example, when the user uses the e-mail processing function using the sub-terminal 3 alone, formed are input areas corresponding to an e-mail screen displaying a list of e-mails to check. When the user selects an input area corresponding to a desired e-mail from the e-mail screen, the display 341 displays the content of the e-mail.

The receiver 343 is a portion constituting a call receiving section, and outputs a voice of a communicating party in using the voice calling function with the sub-terminal 3 connected to the main terminal 2. In the following description, although the case is shown that the receiver 343 is not driven with the sub-terminal 3 separated from the main terminal 2, for example, a configuration may be adopted that the voice calling function can be used only by the sub-terminal 3 separated from the main terminal 2. In this case, it is preferable that the sub-terminal 3 is provided with a microphone equivalent to the microphone 273 of the main terminal 2, and that the receiver 343 outputs the voice of the communicating party.

The sub-camera 344 is used as an image pickup device to shoot a face image of the user when the videophone function is used. In addition, this sub-camera 344 may be used in the camera function.

The speaker 345 outputs a voice of a communicating party when the videophone function is used with the sub-terminal 3 connected to the main terminal 2. Further, the speaker 345 outputs speech data of one-segment broadcasting when the One Seg function is used irrespective of the state of the sub-terminal 3 (in other words, irrespective of whether the sub-terminal 3 is in the connected state or separate state).

The control section 31 controls these components. Particularly, the control section 31 selects and drives a device used in the function operating in the cellular telephone 1 corresponding to the state of the sub-terminal 3 with respect to the main terminal 2, under control of the control section 21 on the main terminal 2 side. For example, in the case that the voice calling function is operating, the control section 31 does not drive the touch panel 342 to be inoperable when the sub-terminal 3 is in the connected state, while driving the touch panel 342 to be operable when the sub-terminal 3 is in the separate state.

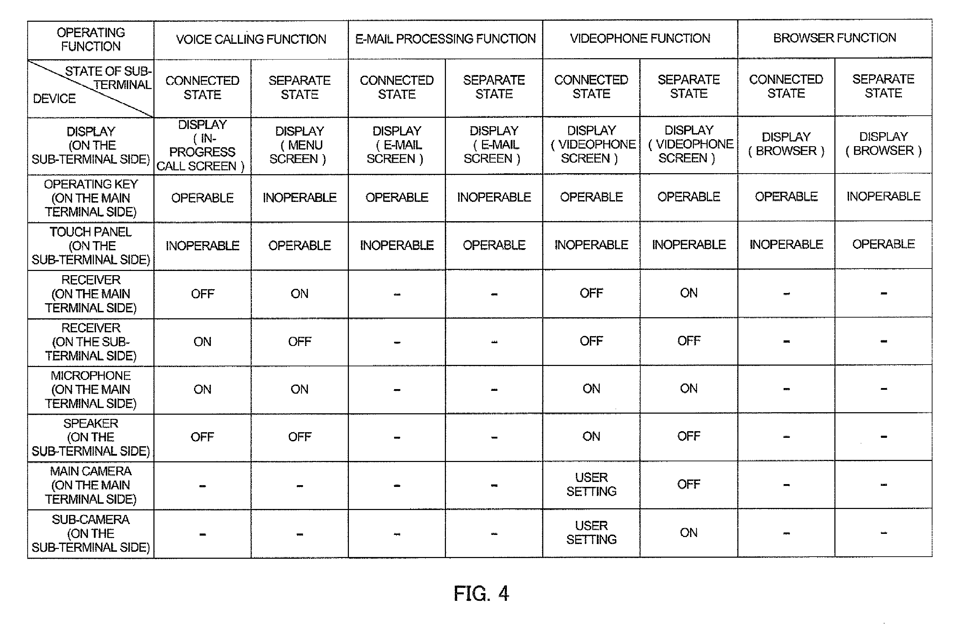

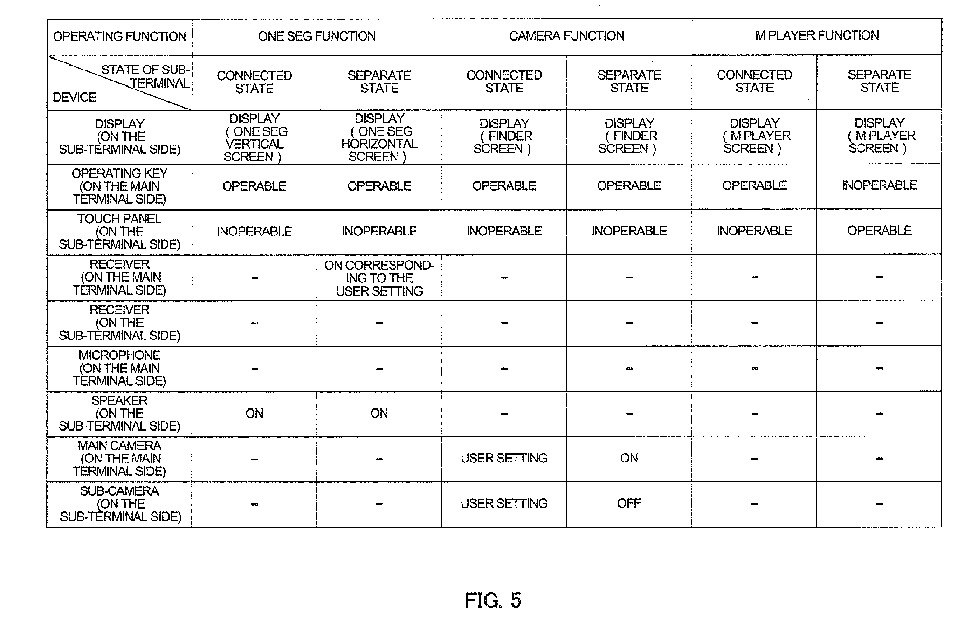

Described herein are descriptions of the device table held in the table holding section 25 of the main terminal 2 that this embodiment has. FIGs. 4 and 5 are diagrams to explain descriptions registered with the device table held in the table holding section 25 of the main terminal 2 that this embodiment has. In addition, the functions of the cellular telephone 1 managed in the device table as shown in FIGs. 4 and 5 are indicated as an example, and the invention is not limited thereto. For example, it is possible to register any function that is the function installed in the cellular telephone 1 and that requires control of driving of devices in the main terminal 2 and sub-terminal 3 corresponding to the state of the sub-terminal 3. Further, devices of the cellular telephone 1 (main terminal 2 and sub-terminal 3) managed in the device table as shown in FIGs. 4 and 5 are indicated as an example, and the invention is not limited thereto. For example, it is possible to register any device that is the device provided in the cellular telephone 1 and that needs to be controlled corresponding to the function under operating conditions and the state of the sub-terminal 3.

As shown in FIGs. 4 and 5, with the device table are registered driving conditions of various devices provided in the cellular telephone 1 (main terminal 2, sub-terminal 3) in association with the state (connected state, separate state) of the sub-terminal 3 in the function (operating function) operating in the cellular telephone 1. More specifically, the states (connected state, separate state) of the sub-terminal 3 are registered in the "voice calling function", "e-mail processing function", "videophone function", "browser function", "One Seg function", "camera function", and "music (M) player function" as the function operating in the cellular telephone 1, and registered as devices provided in the cellular telephone 1 (main terminal 2, sub-terminal 3) are the "display (sub-terminal side)", "operating key (main terminal side)", "touch panel (sub-terminal side)", "receiver (main terminal side)", "receiver (sub-terminal side)", "microphone (main terminal side)", "speaker (sub-terminal side)", "main camera (main terminal side)", and "sub-camera (sub-terminal side)".

As shown in FIG. 4, when the voice calling function is the operating function while the sub-terminal 3 is in the connected state, the display 341 of the sub-terminal 3 displays a screen (in-progress call screen) indicative of a call being in progress, and the operating key 271 of the main terminal 2 is made operable, while the touch panel 342 of the sub-terminal 3 is made inoperable. Further, the receiver 272 of the main terminal 2 is made OFF, while the receiver 343 of the sub-terminal 3 is made ON. Furthermore, the microphone 273 of the main terminal 2 is made ON, while the speaker 345 of the sub-terminal 3 is made OFF. In contrast thereto, when the sub-terminal 3 is in the separate state, the display 341 of the sub-terminal 3 displays a menu screen, and the operating key 271 of the main terminal 2 is made inoperable, while the touch panel 342 of the sub-terminal 3 is made operable. Further, the receiver 272 of the main terminal 2 is made ON, while the receiver 343 of the sub-terminal 3 is made OFF. Furthermore, the microphone 273 of the main terminal 2 is made ON, while the speaker 345 of the sub-terminal 3 is made OFF. In other words, when the voice calling function is the operating function, the display content of the display 341 is switched corresponding to the state of the sub-terminal 3, while the states of the operating key 271, touch panel 342, receiver 272 and receiver 343 are switched.

When the sub-terminal 3 is switched from the connected state to the separate state while the voice calling function is operating, it is expected to search for data (address book, e-mail, scheduler, etc.) while continuing the voice call. Therefore, in the cellular telephone 1 according to this embodiment, such a registered description is registered with the device table that the display 341 displays the menu screen while the touch panel 342 is made operable, and the convenience is thereby improved when the voice calling function operates. More specifically, such a registered description is registered with the device table that a device (herein, for example, the touch panel 342) is made operable where the device is driven in a function (for example, the e-mail processing function) expected to be used when the state of the sub-terminal 3 is switched during the operation of the voice calling function, and it is thereby possible to omit an input operation by the user and to further improve the operability in the cellular telephone 1. Moreover, when the sub-terminal 3 is switched to the separate state, since it is required to enable the voice call to be performed by the main terminal 2 alone, driving of the receiver 343 of the sub-terminal 3 is halted, while the receiver 272 of the main terminal 2 is driven. By this means, the user is capable of continuing the voice call by the main terminal 2 alone by separating the sub-terminal 3 from the main terminal 2, while making a data search or the like on the sub-terminal 3 side. On the other hand, when the sub-terminal 3 is switched from the separate state to the connected state, since it is expected to perform the voice call in the common calling posture, the display content of the display 341 is returned to the original state (i.e. the connected state as shown in FIG. 4) corresponding to the state of the sub-terminal 3, while the states of the operating key 271, touch panel 342, receiver 272 and receiver 343 are also returned to the original states.

In addition, the reason why the operating key 271 of the main terminal 2 is made inoperable when the sub-terminal 3 is separated is to prevent the operability from degrading due to a conflict between operation inputs from the main terminal 2 and sub-terminal 3. By thus exclusively controlling operation inputs from the main terminal 2 and sub-terminal 3, deterioration of the operability is prevented in the cellular telephone 1. However, it is naturally possible to receive operation inputs from both of the main terminal 2 and sub-terminal 3.

Further, when the e-mail processing function is the operating function while the sub-terminal 3 is in the connected state, the display 341 of the sub-terminal 3 displays a screen (e-mail screen) enabling the user to check and create an e-mail, etc. and the operating key 271 of the main terminal 2 is made operable, while the touch panel 342 of the sub-terminal 3 is made inoperable. In contrast thereto, when the sub-terminal 3 is in the separate state, the display 341 of the sub-terminal 3 displays an e-mail screen, and the operating key 271 of the main terminal 2 is made inoperable, while the touch panel 342 of the sub-terminal 3 is made operable. In other words, when the e-mail processing function is the operating function, the states of the operating key 271 and touch panel 342 are switched corresponding to the state of the sub-terminal 3.

When the sub-terminal 3 is switched to the separate state while the e-mail processing function is operating, it is expected to continue the e-mail processing by the sub-terminal 3 alone. Therefore, in the cellular telephone 1 according to this embodiment, the operating key 271 of the main terminal 2 is switched to be inoperable, while the touch panel 342 of the sub-terminal 3 is switched to be operable. By this means, the user is capable of continuing the e-mail processing by the sub-terminal 3 alone only by separating the sub-terminal 3 from the main terminal 2. On the other hand, when the sub-terminal 3 is switched from the separate state to the connected state, since it is expected to perform the e-mail processing in the attitude of the common one-piece cellular telephone 1, the states of the operating key 271 and touch panel 342 are returned to the original states (i.e. the connected state as shown in FIG. 4).

Further, when the videophone function is the operating function while the sub-terminal 3 is in the connected state, the display 341 of the sub-terminal 3 displays a videophone screen, and the operating key 271 of the main terminal 2 is made operable, while the touch panel 342 of the sub-terminal 3 is made inoperable. Further, the receiver 272 of the main terminal 2 and the receiver 343 of the sub-terminal 3 are made OFF, while the microphone 273 of the main terminal 2 and the speaker 345 of the sub-terminal 3 are made ON. In addition, the main camera 274 of the main terminal 2 and the sub-camera 344 of the sub-terminal 3 are dependent on the user advance setting. In contrast thereto, when the sub-terminal 3 is in the separate state, the display 341 of the sub-terminal 3 displays a videophone screen, and the operating key 271 of the main terminal 2 is made operable, while the touch panel 342 of the sub-terminal 3 is made inoperable. Further, the receiver 272 of the main terminal 2 is made ON, while the receiver 343 of the sub-terminal is made OFF. Furthermore, the microphone 273 of the main terminal 2 is made ON, while the speaker 345 of the sub-terminal 3 is made OFF. Furthermore, the main camera 274 of the main terminal 2 is made OFF, while the sub-camera 344 of the sub-terminal 3 is made ON. In other words, when the videophone function is the operating function, the states of the receiver 272 and speaker 345 are switched corresponding to the state of the sub-terminal 3, and the states of the main camera 274 and sub-camera 344 are switched as necessary.

When the sub-terminal 3 is switched from the connected state to the separate state while the videophone function is operating, it is expected to talk while placing the sub-terminal 3 in front of the user's face and putting the main terminal 2 to the user's ear. Therefore, in the cellular telephone 1 according to this embodiment, the receiver 272 of the main terminal 2 is driven, while driving of the speaker 345 of the sub-terminal 3 is halted. By this means, the user is capable of performing the videophone call in the talking posture as described above only by separating the sub-terminal 3 from the main terminal 2. On the other hand, when the sub-terminal 3 is switched from the separate state to the connected state, since it is expected to perform the videophone call while placing the cellular telephone 1 on a desk or the like, the states of the receiver 272 and speaker 345 are returned to the original states (i.e. the connected state as shown in FIG. 4), and the states of the main camera 274 and sub-camera 344 are also returned to the original states as necessary.

Further, when the browser function is the operating function while the sub-terminal 3 is in the connected state, the display 341 of the sub-terminal 3 displays a browser, and the operating key 271 of the main terminal 2 is made operable, while the touch panel 342 of the sub-terminal 3 is made inoperable. In contrast thereto, when the sub-terminal 3 is in the separate state, the display 341 of the sub-terminal 3 displays a browser, and the operating key 271 of the main terminal 2 is made inoperable, while the touch panel 342 of the sub-terminal 3 is made operable. In other words, when the browser function is the operating function, as in the e-mail processing function, the states of the operating key 271 and touch panel 342 are switched corresponding to the state of the sub-terminal 3.

When the sub-terminal 3 is switched to the separate state while the browser function is operating, it is expected to continue the browsing processing by the sub-terminal 3 alone. Therefore, in the cellular telephone 1 according to this embodiment, the operating key 271 of the main terminal 2 is switched to be inoperable, while the touch panel 342 of the sub-terminal 3 is switched to be operable. By this means, the user is capable of continuing the browsing processing using the sub-terminal 3 alone only by separating the sub-terminal 3 from the main terminal 2. On the other hand, when the sub-terminal 3 is switched from the separate state to the connected state, since it is expected to perform the browsing processing in the attitude of the common one-piece cellular telephone 1, the states of the operating key 271 and touch panel 342 are returned to the original states.

As shown in FIG. 5, when the One Seg function is the operating function while the sub-terminal 3 is in the connected state, the display 341 of the sub-terminal 3 displays picture data in the One Seg direction in a vertical screen, and the operating key 271 of the main terminal 2 is made operable, while the touch panel 342 of the sub-terminal 3 is made inoperable. Further, the speaker 345 of the sub-terminal 3 is made ON. In contrast thereto, when the sub-terminal 3 is in the separate state, the display 341 of the sub-terminal 3 displays picture data of one-segment broadcasting in a horizontal screen, and the operating key 271 of the main terminal 2 is made operable, while the touch panel 342 of the sub-terminal 3 is made inoperable. Further, the receiver 272 of the main terminal 2 is made ON corresponding to the user setting, while the speaker 345 of the sub-terminal 3 is made ON. In other words, when the One Seg function is the operating function, the display content of the display 341 is switched corresponding to the state of the sub-terminal 3, while the state of the receiver 272 is switched corresponding to the user setting.

When the sub-terminal 3 is switched from the connected state to the separate state while the One Seg function is operating, it is expected to place the sub-terminal 3 on a desk or the like to use the main terminal 2 like a remote controller. In the cellular telephone 1 according to this embodiment, the operating key 271 is maintained at the operable state, while the touch panel 342 is maintained at the inoperable state. Further, generally, the speech data of one-segment broadcasting is output from the speaker 345 of the sub-terminal 3, and in the separate state, it is also possible to output the speech data from the receiver 272 of the main terminal 2. Therefore, in the cellular telephone 1 according to this embodiment, the receiver 272 is driven corresponding to the user setting. In addition, in this case, it is preferable to halt driving of the speaker 345 of the sub-terminal 3. By this means, the user is capable of watching one-segment broadcasting calmly by adopting the posture of putting the main terminal 2 to the user's ear without using an earphone or the like. On the other hand, when the sub-terminal 3 is switched from the separate state to the connected state, it is expected to watch one-segment broadcasting in the form of the common one-piece cellular telephone 1, and therefore, the state of the receiver 272 is returned to the original state (i.e. the connected state as shown in FIG. 5) as necessary.

When the sub-terminal 3 is switched to the separate state while the One Seg function is operating, it is also expected to watch one-segment broadcasting by the sub-terminal 3 alone. In this case, in the cellular telephone 1 according to this embodiment, it is preferable to switch the operating key 271 of the main terminal 2 to be inoperable, while switching the touch panel 342 of the sub-terminal 3 to be operable. By this means, the user is capable of watching one-segment broadcasting using the sub-terminal 3 alone only by separating the sub-terminal 3 from the main terminal 2.

Further, when the camera function is the operating function while the sub-terminal 3 is in the connected state, the display 341 of the sub-terminal 3 displays a finder screen, and the operating key 271 of the main terminal 2 is made operable, while the touch panel 342 of the sub-terminal 3 is made inoperable. In addition, the main camera 274 of the main terminal 2 and the sub-camera 344 of the sub-terminal 3 are dependent on the user advance setting. In contrast thereto, when the sub-terminal 3 is in the separate state, the display 341 of the sub-terminal 3 displays a finder screen, and the operating key 271 of the main terminal 2 is made operable, while the touch panel 342 of the sub-terminal 3 is made inoperable. Further, the main camera 274 of the main terminal 2 is made ON, while the sub-camera 344 of the sub-terminal 3 is made OFF. In other words, when the camera function is the operating function, the states of the main camera 274 and sub-camera 344 are switched corresponding to the state of the sub-terminal 3.

When the sub-terminal 3 is switched from the connected state to the separate state while the camera function is operating, it is expected to check the finder screen with the display 341 of the sub-terminal 3, while performing imaging processing in the main camera 274 of the main terminal 2. Therefore, in the cellular telephone 1 according to this embodiment, the states of the main camera 274 of the main terminal 2 and the sub-camera 344 of the sub-terminal 3 driven (not driven) by user setting are switched when necessary. By this means, the user is capable of checking the finder screen with the display 341 of the sub-terminal 3, while performing the imaging processing in the main camera 274 of the main terminal 2 as described above only by separating the sub-terminal 3 from the main terminal 2. On the other hand, when the sub-terminal 3 is switched from the separate state to the connected state, since it is expected to perform the imaging processing in the attitude of the common one-piece cellular telephone 1, the states of the main camera 274 of the main terminal 2 and the sub-camera 344 of the sub-terminal 3 are returned to the original states (i.e. the connection state as shown in FIG. 5)

Further, when the music player function is the operating function while the sub-terminal 3 is in the connected state, the display 341 of the sub-terminal 3 displays a music player screen enabling the user to replay and halt desired music, check music being replayed and the like, and the operating key 271 of the main terminal 2 is made operable, while the touch panel 342 of the sub-terminal 3 is made inoperable. In contrast thereto, when the sub-terminal 3 is in the separate state, the display 341 of the sub-terminal 3 displays the music player screen, and the operating key 271 of the main terminal 2 is made inoperable, while the touch panel 342 of the sub-terminal 3 is made operable. In other words, when the music player function is the operating function, the states of the operating key 271 and touch panel 342 are switched corresponding to the state of the sub-terminal 3.

When the sub-terminal 3 is switched to the separate state while the music player function is operating, it is expected to continue replay of music and the like by the sub-terminal 3 alone. Therefore, in the cellular telephone 1 according to this embodiment, the operating key 271 of the main terminal 2 is switched to be inoperable, while the touch panel 342 of the sub-terminal 3 is switched to operable. By this means, the user is capable of continuing replay of music and the like only by separating the sub-terminal 3 from the main terminal 2. On the other hand, when the sub-terminal 3 is switched from the separate state to the connected state, since it is expected to perform replay of music and like in the attitude of the common one-piece cellular telephone 1, the states of the operating key 271 and touch panel 342 are returned to the original states (i.e. the connection state as shown in FIG. 5).

In the cellular telephone 1 according to this embodiment, the table holding section 25 holds the device table with thus registered table data, and the control section 21 of the main terminal 2 determines devices driven in the main terminal 2 and sub-terminal 3 according to the descriptions of the device table corresponding to the state (separate state, connected state) of the sub-terminal 3 detected in the state monitoring section 24. Thus, since the control section 21 determines devices driven in various functions in response to the state of the sub-terminal 3 with respect to the main terminal 2, it is possible to select and drive devices required to execute various functions, and therefore, it is possible to separate a part of the cellular telephone 1 (sub-terminal 3) to use while ensuring the convenience in various functions installed in the cellular telephone 1.

Described next are operations in determining devices driven in the main terminal 2 and sub-terminal 3 in the cellular telephone 1 according to this embodiment. In the cellular telephone 1 according to this embodiment, when the state monitoring section 24 detects a change in the state of the sub-terminal 3 and when the control section 21 detects a change in the state of the operating function, the control section 21 performs the operation of determining devices driven in the main terminal 2 and sub-terminal 3.

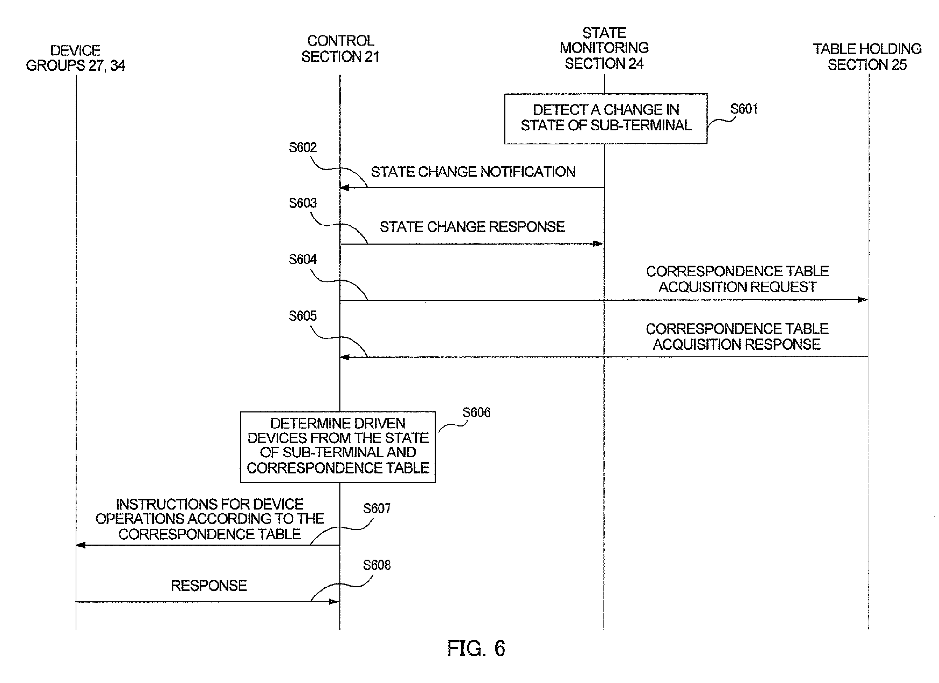

Referring to FIG. 6, described first is the operation of determining devices driven in the main terminal 2 and sub-terminal 3 when the state monitoring section 24 detects a change in the state of the sub-terminal 3. FIG. 6 is a sequence diagram to explain the operation in determining devices driven in the main terminal 2 and the sub-terminal 3 when the state monitoring section 24 detects a change in the state of the sub-terminal 3 in the cellular telephone 1 according to this embodiment. In addition, the control section 21 is assumed to always monitor the function (operating function) operating in the cellular telephone 1 and grasp the function.

In the cellular telephone 1 according to this embodiment, the state monitoring section 24 always monitors whether the state (connected state, separate state) of the sub-terminal 3 changes with respect to the main terminal 2. Then, as shown in FIG. 6, when the state monitoring section 24 detects a state change of the sub-terminal 3 (step S601), the section 24 outputs state change notification of the sub-terminal 3 to the control section 21 (step S602). In addition, this state change notification includes the changed state of the sub-terminal 3. Upon receiving this state change notification suitably, the control section 21 outputs a state change response indicative of the reception to the state monitoring section 24 (step S603).

Upon receiving this state change notification, the control section 21 outputs a request (correspondence table acquisition request) for acquisition of table data corresponding to the function (operating function) operating in the cellular telephone 1 to the table holding section 25 (step S604). Upon receiving this correspondence table acquisition request, the table holding section 25 outputs a correspondence table acquisition response including the table data (hereinafter, referred to as a "correspondence table" as appropriate) corresponding to the currently operating function among the device tables as shown in FIGs. 4 and 5 to the control section 21 (step S605).

Upon receiving the correspondence table from the table holding section 25, the control section 21 determines devices driven in the cellular telephone 1 (main terminal 2, sub-terminal 3) from the state of the sub-terminal 3 included in the state change notification and the correspondence table included in the correspondence table acquisition response (step S606). Then, the control section 21 instructs corresponding devices to perform operations according to the correspondence table (step S607). Upon receiving this instruction suitably, each of the devices outputs a response indicative of the reception to the control section 21 (step S608). Thus, when the state monitoring section 24 detects a state change of the sub-terminal 3, the devices driven in the main terminal 2 and sub-terminal 3 are determined and driven. In this case, whenever a change is detected in the state of the sub-terminal 3, the devices driven in the sub-terminal 3 and main terminal 2 are judged in response to the state of the sub-terminal 3 that has been changed. It is thereby possible to drive suitable devices corresponding to the function operating in the cellular telephone 1 whenever the state of the sub-terminal 3 is switched.

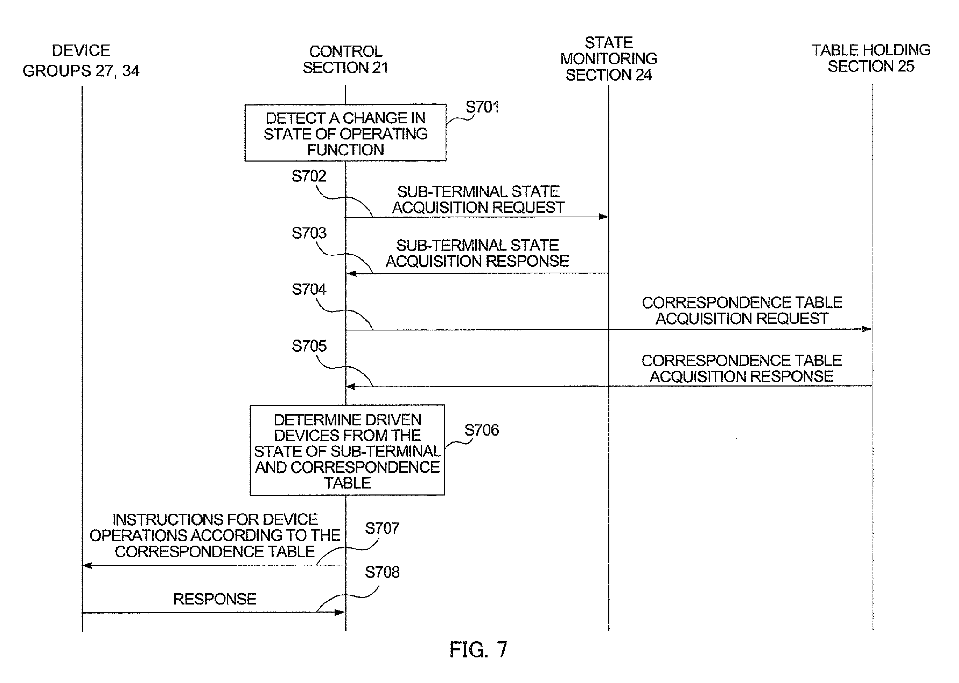

Referring to FIG. 7, described next is the operation of determining devices driven in the main terminal 2 and sub-terminal 3 when the control section 21 detects a change in the operating function. FIG. 7 is a sequence diagram to explain the operation in determining devices driven in the main terminal 2 and the sub-terminal 3 when the control section 21 detects a change in the operating function in the cellular telephone 1 according to this embodiment. In addition, the state monitoring section 24 is assumed to always monitor the state (connected state, separate state) of the sub-terminal 3 with respect to the main terminal 2 and grasp the state.

In the cellular telephone 1 according to this embodiment, the control section 21 always monitors whether the state is changed in the function (operating function) operating in the cellular telephone 1. Then, as shown in FIG. 7, when a change is detected in the state of the operating function (step S701), the control section 21 outputs a request (sub-terminal state acquisition request) for acquisition of the state of the sub-terminal 3 to the state monitoring section 24 (step S702). Upon receiving this sub-terminal state acquisition request, the state monitoring section 24 outputs a sub-terminal state acquisition response including the state of the sub-terminal 3 to the control section 21 (step S703).

Upon receiving this sub-terminal state acquisition response, the control section 21 outputs a request (correspondence table acquisition request) for acquisition of the correspondence table of the function (operating function) currently operating in the cellular telephone 1 to the table holding section 25 (step S704). Upon receiving this correspondence table acquisition request, the table holding section 25 outputs a correspondence table acquisition response including the correspondence table of the currently operating function among the device tables as shown in FIGs, 4 and 5 to the control section 21 (step S705).

Upon receiving the correspondence table from the table holding section 25, the control section 21 determines devices driven in the cellular telephone 1 (main terminal 2, sub-terminal 3) from the state of the sub-terminal 3 included in the sub-terminal state acquisition response and the correspondence table included in the correspondence table acquisition response (step S706). Then, the control section 21 instructs corresponding devices to perform operations according to the correspondence table (step S707). Upon receiving this instruction suitably, each of the devices outputs a response indicative of the reception to the control section 21 (step S708). Thus, when the control section 21 detects a state change of the operating function, the devices driven in the main terminal 2 and sub-terminal 3 are determined and driven. In this case, whenever a change is detected in the state of the function operating in the cellular telephone 1, the devices driven in the sub-terminal 3 and main terminal 2 are judged in response to the current state of the sub-terminal 3. It is thereby possible to drive suitable devices corresponding to the switched function whenever the state of the function operating in the cellular telephone 1 is switched.

Meanwhile, in the cellular telephone 1 according to this embodiment, devices required to execute each function are selected and driven in response to the state (connected state, separate state) of the sub-terminal 3 with respect to the main terminal 2, and such a case may occur that some function is not usable depending on the state of the sub-terminal 3. For example, in the case where such a function exists that is only usable when the sub-terminal 3 is connected to the main terminal 2, the function cannot be used when the sub-terminal 3 is in the separate state. As such a function, for example, considered is a function usable only with the main terminal 2 connected to the sub-terminal 3 from the viewpoint of security. In the case where such a function is the operating function, for example, when the sub-terminal 3 is separated, it is preferable to inform the user that the function cannot be used, while informing the user of the state (herein, connected state) of the sub-terminal 3 enabling the function to be used.

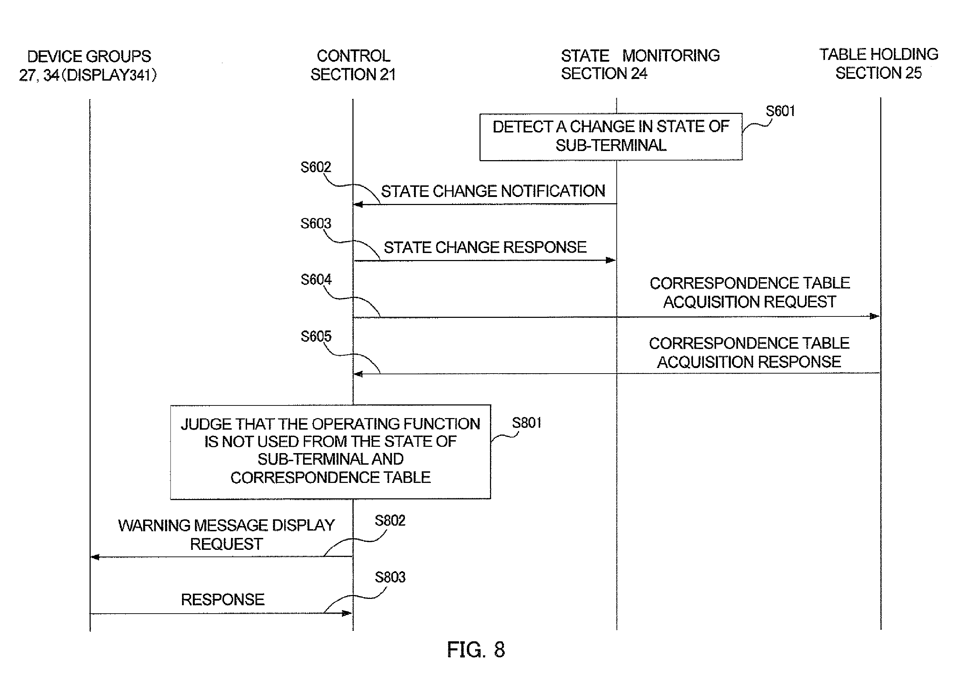

In the cellular telephone 1 according to this embodiment, for example, it is registered that any device does not exist that can be driven in association with the state (in the aforementioned example, separate state) of the sub-terminal 3 in the corresponding function, the control section 21 informs the user of the aforementioned matter corresponding to the registered description, and it is thereby possible to cope with the situation as described above. Referring to FIG. 8, described below is the operation when the sub-terminal 3 shifts to the state where some function becomes inoperable in the case that the function, which becomes inoperable corresponding to the state of the sub-terminal 3, is the operating function. FIG. 8 is a sequence diagram to explain the operation when the sub-terminal 3 shifts to the state where some function becomes inoperable in the case that the function, which becomes inoperable corresponding to the state of the sub-terminal 3, is the operating function in the cellular telephone 1 according to this embodiment. In addition, in FIG. 8, the description is made according to the sequence (FIG. 6) of the case where the state monitoring section 24 detects a change in the state of the sub-terminal 3, but it is possible to the similar processing according to the sequence (FIG. 7) of the case where the control section 21 detects a change in the state of the operating function. In addition, in FIG. 8, the common processing with FIG. 6 is assigned the same reference numeral and the description thereof is omitted.

The processing (steps S601 to S605) is the same as in the sequence as shown in FIG. 6 of from detection of a state change of the sub-terminal 3 by the state monitoring section 24 to transmission of a correspondence table acquisition response to the control section 21 from the table holding section 25. In the case of the sequence as shown in FIG. 8, upon receiving a correspondence table from the table holding section 25, the control section 21 judges that the operating function cannot be used in the current state of the sub-terminal 3 from the state of the sub-terminal 3 included in the state change notification and the correspondence table included in the correspondence table acquisition response (step S801). Then, when the control section 21 thus judges that the operating function cannot be used, the section 21 outputs a display request for a message of warning to the display 341 of the sub-terminal 3 (step S802). In this case, the message of warning includes a description that the operating function cannot be used in the current state of the sub-terminal 3 and the state of the sub-terminal 3 enabling the operating function to be used. Upon receiving this display request suitably, the display 341 outputs a response indicative of the reception to the control section 21 (step S803).

The message of warning is displayed in the display 341 receiving this display request. By this means, it is possible to inform the user that the operating function cannot be used in the current state of the sub-terminal 3, and of the state of the sub-terminal 3 enabling the operating function to be used, and therefore, it is possible to urge the user to suspend the operating function, change the state of the sub-terminal 3 and the like.

The present invention is not limited to the above-mentioned embodiment, and is capable of being carried into practice with various modifications thereof. For example, the processing sections and processing procedures are capable of being carried into practice with modifications thereof as appropriate without departing from the scope of the invention. Moreover, the invention is capable of being carried into practice with modifications thereof as appropriate without departing from the scope of the invention.

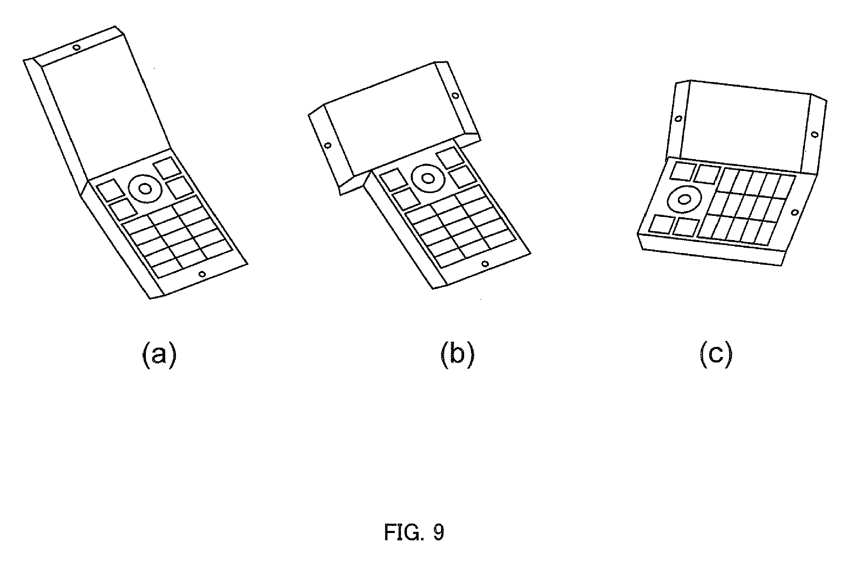

For example, the above-mentioned embodiment describes the case of determining devices to be driven in association with the currently operating function corresponding to the state (connected state, separate state) of the sub-terminal 3 with respect to the main terminal 2 in the cellular telephone 1. Alternately, a plurality of connection forms is prepared in the case that the sub-terminal 3 is connected, and devices to be driven may be adjusted corresponding to the connection form. For example, in the above-mentioned embodiment, devices to be driven are defined based on the premise of the connection form of the sub-terminal 3 corresponding to the clamshell type cellular telephone 1 as shown in FIG. 9(a). Alternately, connection forms may be prepared corresponding to the cellular telephone 1 having the cycloidal hinge structure enabling the sub-terminal 3 to rotate 90 degrees with respect to the main terminal 2 with the telephone 1 opened as shown in FIG. 9(b), or connection forms may be prepared corresponding to the double-open type cellular telephone 1 where the sub-terminal 3 is opened both in the vertical direction and horizontal direction with respect to the main terminal 2, and devices to be driven may be adjusted corresponding to the type of the connection forms of the sub-terminal 3. In this case, since devices can be selected and driven corresponding to the type of the connection forms of the sub-terminal 3, it is possible to select devices to be driven finely corresponding to the usage form of the cellular telephone 1, and it is made possible to provide the cellular telephone 1 more excellent in convenience.

This application is based on the Japanese Patent Application No.2008-298020 filed on November 21, 2008, the entire content of which is expressly incorporated by reference herein.

## Claims

1. A cellular telephone apparatus in which a first apparatus constituting a part of the cellular telephone apparatus is provided to be separable from a second apparatus constituting an apparatus body, comprising:
a detecting section that detects a state of the first apparatus;
a table holding section that holds a device table that defines devices driven in various functions of the cellular telephone apparatus corresponding to states of the first apparatus; and
a control section that determines devices driven in the first apparatus and the second apparatus according to descriptions of the device table in response to the state of the first apparatus detected in the detecting section.

2. The cellular telephone apparatus according to claim 1, wherein when the detecting section detects a change in the state of the first apparatus, the detecting section notifies the control section of the state of the first apparatus that has been changed, and the control section determines devices driven in the first apparatus and the second apparatus according to descriptions of the device table in response to the notified state of the first apparatus.

3. The cellular telephone apparatus according to claim 1, wherein when the control section detects a change in the state in the function operating in the cellular telephone apparatus, the control section inquires of the detecting section for the state of the first apparatus, and determines devices driven in the first apparatus and the second apparatus according to descriptions of the device table in response to the responded state of the first apparatus.

4. The cellular telephone apparatus according to claim 1, wherein when the control section is instructed to use a particular function that is inoperable in the current state of the first apparatus, the control section informs of the state of the first apparatus enabling the particular function to operate.

5. The cellular telephone apparatus according to claim 1 wherein the device table defines a device driven in a function expected to be used when the state of the first apparatus is switched in a particular function of the cellular telephone apparatus.

6. The cellular telephone apparatus according to claim 5, wherein the device table defines a device driven to use a voice calling function only by the second apparatus when the first apparatus is switched to a separate state in the voice calling function in the cellular telephone apparatus.

7. The cellular telephone apparatus according to claim 5, wherein the device table defines a device driven to use an e-mail processing function only by the first apparatus when the first apparatus is switched to a separate state in the e-mail processing function in the cellular telephone apparatus.

8. The cellular telephone apparatus according to claim 5, wherein the device table defines a device driven to use a browser function only by the first apparatus when the first apparatus is switched to a separate state in the browser function in the cellular telephone apparatus.

9. The cellular telephone apparatus according to claim 5, wherein the device table defines a device driven to use a speech replay function only by the first apparatus when the first apparatus is switched to a separate state in the speech replay function in the cellular telephone apparatus.

10. A control method of a cellular telephone apparatus in which a first apparatus constituting a part of the cellular telephone apparatus is provided to be separable from a second apparatus constituting an apparatus body, and the cellular telephone apparatus holds a device table that defines devices driven in various functions of the cellular telephone apparatus corresponding to states of the first apparatus, comprising:
detecting a state of the first apparatus; and determining devices driven in the first apparatus and the second apparatus according to descriptions of the device table in response to the state of the first apparatus that has been detected.

11. The control method of the cellular telephone apparatus according to claim 10, wherein when a change is detected in the state of the first apparatus, devices driven in the first apparatus and the second apparatus are determined according to the descriptions of the device table in response to the state of the first apparatus that has been changed.

12. The control method of the cellular telephone apparatus according to claim 10, wherein when a change is detected in a state of a function operating in the cellular telephone apparatus, devices driven in the first apparatus and the second apparatus are determined according to the descriptions of the device table in response to the state of the first apparatus at the time of detecting the change in the state.
